# EUROPEAN PATENT SPECIFICATION

(11) **EP 1 198 492 B1**
(45) Date of publication and mention of the grant of the patent: **08.10.2003**
(21) Application number: 00951335.9
(22) Date of filing: 05.07.2000
(51) Int. Cl.: C08G 73/02, C11D 3/37

(54) **ZWITTERIONIC POLYAMINES AND A PROCESS FOR THEIR PRODUCTION**
ZWITTERIONISCHE POLYAMINE UND VERFAHREN ZU IHRER HERSTELLUNG
POLYETHERPOLYAMINES ZWITTERIONIQUES ET LEUR PROCEDE DE PRODUCTION

(30) Priority: 16.07.1999 US 144165 P
(43) Date of publication of application: 24.04.2002
(73) Proprietor: BASF AKTIENGESELLSCHAFT, 67056 Ludwigshafen (DE)
(72) Inventor: BOECKH, Dieter, D-67117 Limburgerhof (DE); BORZYK, Oliver, D-67346 Speyer (DE); EHLE, Michael, D-67071 Ludwigshafen (DE); NÖRENBERG, Ralf, D-64572 Büttelborn (DE); GOSSELINK, Eugene, P., Cincinnati, OH 45217 (US); DUPONT, Jeffrey, S., Cincinnati, OH 45217 (US); ROHRBAUGH, Robert, H., Cincinnati, OH 45217 (US); PRICE, Kenneth, N., Cincinnati, OH 45217 (US); DEINHAMMER, Randall, S., Cincinnati, OH 45217 (US)
(86) International application number: EP0006296
(87) International publication number: WO01005874

(56) References cited:
- WO-A-97/28207
- DE-A- 19 647 060
- US-A- 4 739 094
- US-A- 5 049 680

## Description

The present invention relates to zwitterionic polyamines and a process for their production by alkoxylation of polyamines and introduction of anionic groups.

### Background of the invention

EP-A-0,111,976 relates to watersoluble zwitterionic compounds having clay soil removal/anti-redeposition properties. An example of such a compound is a with chlorosulfonic acid sulfated quaternized addition product of ethoxylated tetraethylenepentamine with a total degree of ethoxylation of 21.

EP-A-0,112,592 relates to zwitterionic polymers which are for example obtained by alkoxylation of polyalkyleneamines such as triethylenetetramine or tetraethylenepentamine or of polyethyleneimines, sulfonation of the alkoxylated products and subsequent quaternization. The zwitterionic products disclosed in the above patents have clay-soil removal and anti-redeposition properties when used in detergent compositions, however their effectiveness in dispersing and removing clay embedded in the fabric into the laundry liquor is not sufficient. Furthermore the specifically disclosed compounds of this literature reference are thermally instable.

GB-A-2,220,215 relates to sulfated alkoxylated mono- or polyamines derived from polymethlenediamines with 2 - 6 methylene groups between the nitrogen atoms or polyalkylenepolyamines in which the alkylene contains 2-4 carbon atoms and containing 3-6 amino groups. They may bear a long chain-alkyl substituent at one of the nitrogen atoms and are quaternized. However it was found that these polymers are not favorable for clay soil removal within laundry operations where anionic surfactants are present.

U.S.Patent 4,739,094 discloses alkoxylated aminopolyethers containing units of ethylene oxide and propylene oxide and having a molecular weight of from 10,000 to 150,000. The alkoxylated aminopolyethers are water-soluble and are used in 5 to 60 % strength by weight aqueous solution in the preparation of coal/water slurries. If appropriate, the alkoxylated aminopolyethers can also be reacted with carboxylic acid anhydrides, amidosulfonic acids and urea, acid chlorides of sulfur or of phosphorus or chloroacetic acid esters. The reaction products can be converted into ionic compounds by subsequent neutralization or hydrolysis.

It is therefore an object of the invention to provide new poly-mers with improved thermal stability.

### Summary of the invention

The above object is achieved with a zwitterionic polyamine comprising a linear or branched hydrophobic polyamine backbone having 2 to 10 tertiary amino nitrogen atoms and a spacer between two tertiary amino nitrogen atoms wherein the spacer is selected from the group consisting of C₃-C₁₅-alkylene, C₅-C₁₅-cycloalkylene 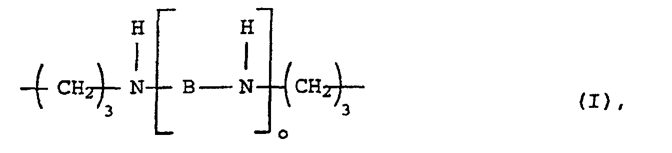 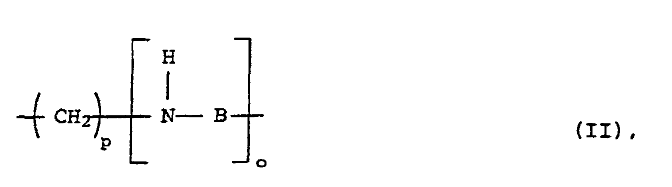 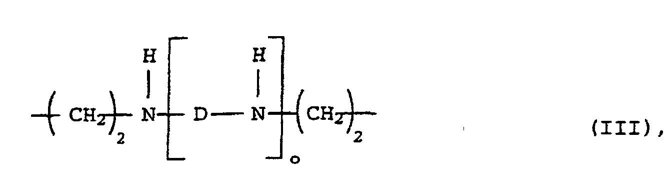 wherein in formula I, II and III
B is C₂-C₁₆-alkylene, C₅-C₁₅-cycloalkylene
D is C₄-C₁₆-alkylene, C₅-C₁₅-cycloalkylene
O is 1 or 2,
p is 3 to 8 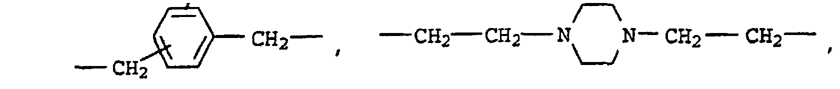 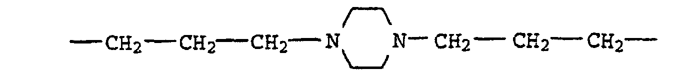 and 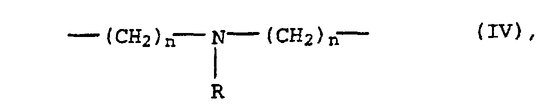 wherein in formula IV
R = C₁- to C₂₂-alkyl or C₇-C₂₂-aralkyl and n = 3 to 6, at least one tertiary amine end group of the polyamine backbone contains two groups having the formula

-(A)ₙ-X (V)

or 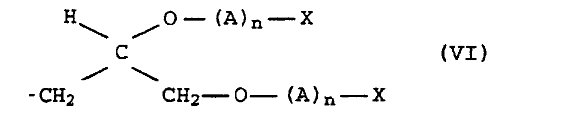 wherein

A means an ethylene oxide unit, a propylene oxide unit, a unit of butylene oxides and a tetrahydrofuran unit,
n is a number of from 1 to 50,
X is ― SO₃M , ― CH₂― CH₂― SO₃M , ― CH₂― CH₂― CH₂― SO₃M , 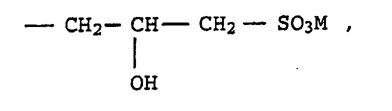 ―CH₂―COOM , ― CH₂ ― CH₂ ―COOM ,
― PO₃M , ― CH₂ ― CH₂ ― PO₃M₂ , with the proviso that in formula VI one X may also be hydrogen and
M is hydrogen, alkali metal or ammonium,
or contains one group of formula V or VI and one group selected from radicals consisting of

―(A)ₙ―H,

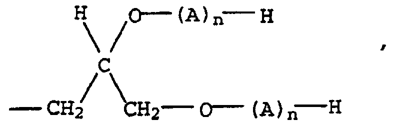

C₁- to C₂₂-alkyl and C₇-C₂₂-aralkyl, the meaning of A and n is the same as in formula V or VI,
said zwitterionic polyamine having a molecular weight up to 9,000 optionally containing up to 100% of the nitrogen atoms quaternized.

The object is also achieved with a process for the production of a zwitterionic polyamine which comprises a first step wherein
(i) a linear or branched hydrophobic polyamine having 2 to 10 tertiary amino nitrogen atoms and a spacer between two tertiary amino nitrogen atoms wherein the spacer is selected from the group consisting of
   C₈- to C₁₆-alkylene, C₅- to C₁₅-cycloalkylene 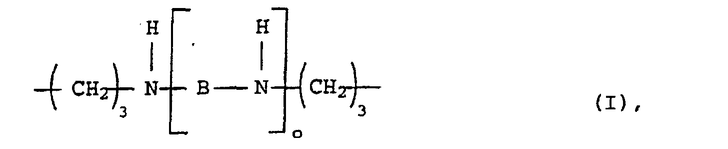 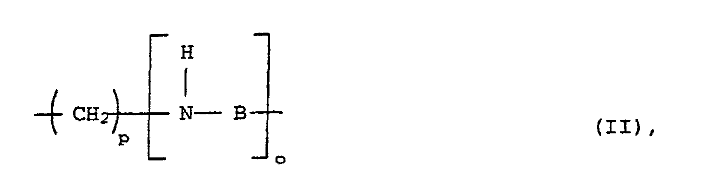 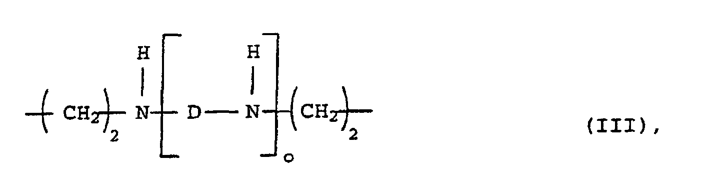 wherein in formula I, II and III
   B is C₂-C₁₆-alkylene, C₅-C₁₅-cycloalkylene
   D is C₄-C₁₆-alkylene, C₅-C₁₅-cycloalkylene
   o is 1 or 2,
   p is 3 to 8 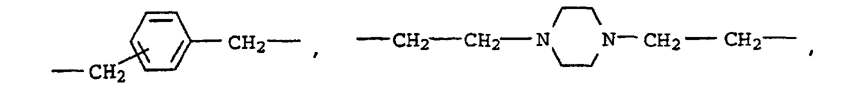 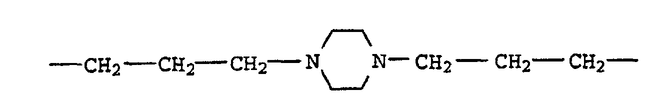 and 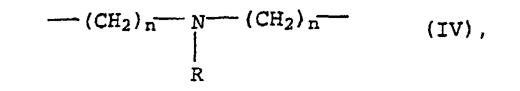 wherein in
   in formula IV R = C₁- to C₂₂-alkyl or C₇-C₂₂-aralkyl and n = 2 to 6,
   is reacted with
(ii) at least one C₂- to C₄-alkylene oxide or tetrahydro furane at such a ratio that on each NH group of the polyamine 1 to 50 units of the alkylene oxide or of tetrahydrofurane are added,
   a second step wherein the alkoxylated polyamine obtained in the first step is reacted with a compound selected from the group consisting of a halogen sulfonic acid, halogen phosphorous acid, vinyl sulfonic acid, propane sultone, halogen acetic acid, acrylic acid, methacrylic acid, vinyl phosphorous acid and the alkali metal or ammonium salts of the said acids, in such a manner that at least one tertiary amine end group of the alkoxylated polyamine contains two groups having the formula

   ―(A)ₙ―X (V)

   or 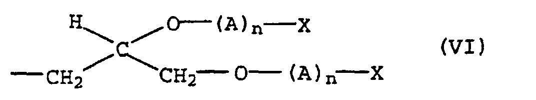
wherein
A means an ethylene oxide unit, a propylene oxide unit, a unit of butylene oxides and a tetrahydrofuran unit,
n is a number of from 1 to 50,
X is ― SO₃M , ― CH₂― CH₂― SO₃M , ― CH₂― CH₂― CH₂― SO₃M , 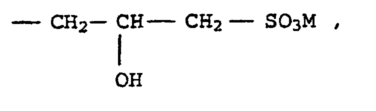 ―CH₂― COOM, ―CH₂―CH₂―COOM,
―PO₃M, ― CH₂―CH₂―PO₃M₂,
with the proviso that in formula VI one X may also be hydrogen and
M is hydrogen, alkali metal or ammonium,
or contains one group of formula V or VI and one group selected from radicals consisting of

―(A)ₙ―H,

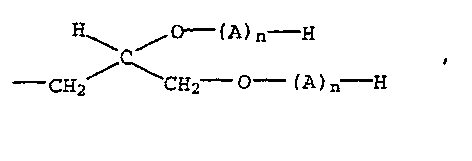

the meaning of A and n is the same as in formula V or VI,
and optionally
a third step wherein up to 100% of the tertiary nitrogen atoms of the reaction product obtained in the second step are quaternized, said degree of quaternization, may also be obtained by first quaternizing the reaction product obtained in the first step and subsequently carrying out the second step.

Preferred zwitterionic polyamines contain two groups of formula V or VI attached to the tertiary nitrogen atoms of the end groups of the polyamines. Especially preferred zwitterionic polymines contain the nitrogen atoms of the end groups of the polyamine backbone quaternized and, as substituents, two groups of formula V or VI and one C1- to C22- alkyl group or a hydroxyalkyl group. In most cases the nitrogen end groups of the polyamine backbone are quaternized and contain as substituents two groups of formula V and a C1- to C22- alkyl group. Other preferred zwitterionic polyamines contain quaternized amino nitrogen end groups bearing, as substituents, two groups of formula V and a hydroxyethyl or hydroxypropyl group.

The substituent A in formulae V and VI may have the following structures: ―CH₂―CH₂―O― , 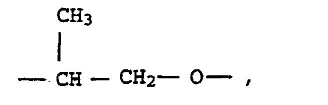 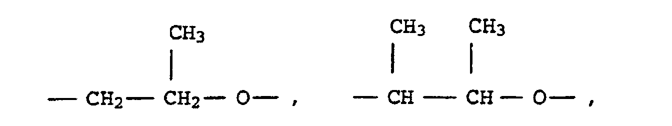 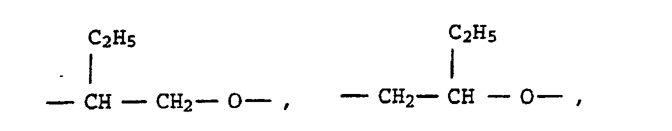 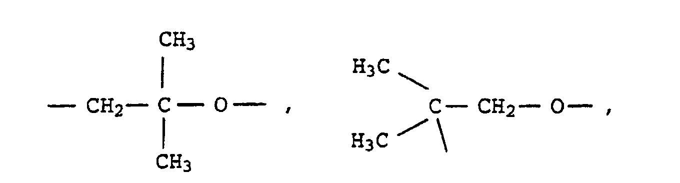 ―CH₂―CH₂―CH₂―CH₂―O―.

Other zwitterionic polyamines are charaterized in that the spacer between two nitrogen atoms of the polyamine backbone is a cyclic C5- to C15-alkylene group.

Of particular interest are zwitterionic polyamines wherein the polyamine backbone between the nitrogen atoms is derived from an amine selected from the group consisting of bis(hexamethylene)triamine, N,N'-bis(3-aminopropyl)piperazine, N,N'-bis(2-aminoethyl)piperazine and bis(3-aminopropyl)hexamethylenediamine and wherein at least one tertiary amine end group of the polyamine backbone contains two groups having formula V or VI.

The zwitterionic polyamine is derived from a linear or branched hydrophobic polyamine. The backbone of the polyamine contains 2 to 10 tertiary amino nitrogen atoms and has one spacer between two tertiary amino nitrogen atoms. Polyamines containing a C₈- to C₁₆-alkylene group as spacer are for example 1,8-diaminooctane, 1,10-diaminodecane and 1,12-diaminododecane. Examples of suitable polyamines containing the above spacers of formula I - IV are dipropylenetriamine, tripropylenetetramine, bis(hexamethylene)triamine, bis(octamethylene)triamine, aminoethylpropylenediamine, aminoethylbutylenediamine, aminoethylhexamethylenediamine, N,N'-bis(aminoethyl)propylenediamine, N,N'-bis(aminoethyl)butylenediamine, N,N'-bis (aminoethyl)hexamethylenediamine, N,N'-bis(aminopropyl)ethylendiamine, N,N'-bis(aminopropyl)butylenediamine, N,N'-bis (aminopropyl)butylendiamine, N,N'-bis(aminopropyl)hexamethylenediamine, N,N'-bis(aminopropyl)ethylenediamine, N,N-bis(3-aminopropyl)-N-methylamine, N-(dimethylaminopropyl)propylenediamine, N,N'-dimethyl-1,3-diaminopropane, N,N-bis(3-aminopropyl)-N-octylamine and N,N-bis(3-aminopropyl)-N-ethylamine.

Polyamines with spacers consisting of a cyclic C5- to C15-alkylene group are for example 1,3-cyclohexylenediamine, 4-methyl-1,3-cyclohexylenediamine, 2-methyl-1,3-cyclohexylenediamine, isophoronediamine and 4,4'-diamino(biscyclohexylene)methane.

The zwitterionic polyamines can also be prepared from polyamines which contain other cyclic spacers. Such polyamines are, for example, o-, m-, and p-di(aminomethylen)benzene, N,N'-bis(aminoethyl)piperazine, N,N'-bis(aminopropylpiperazine and N-aminopropylpiperazine.

Especially preferred zwitterionic polyamines may be characterized by the following formula 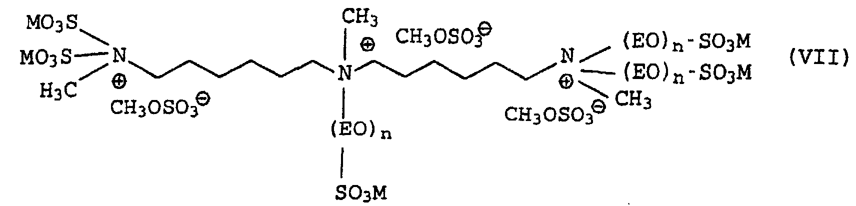 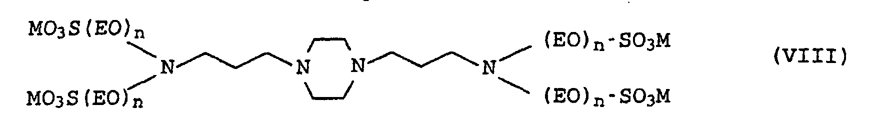 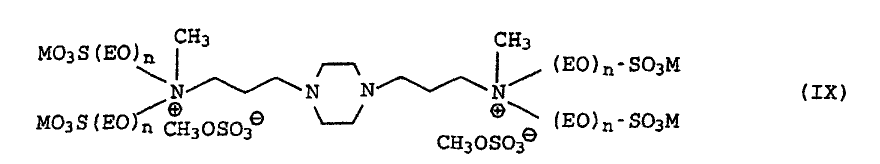 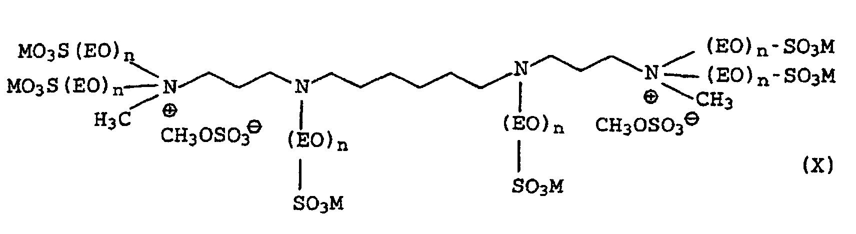 wherein
- EO: is -CH₂-CH₂-O-
- M: is H, Na, K or ammonium and
- n: is 15-25.

The weight average molecular weight Mw of the zwitterionic polypolyamines is up to 9,000, preferably of from 1,500 to 7,500 and more preferably of from 2,000 to 6,000. The zwitterionic polyamines can be soluble or dispersible in water and aqueous or nonaqueous solvents or formulations. In one preferred embodiment of the present invention they are water-soluble. These water soluble zwitterionic polyetherpolyamines are used in laundry detergent compositions and have an excellent degree of clay soil removal from fabrics.

The zwitterionic polyamines are net anionic. Preferably the average number of anionic charges resulting from groups X in formulae V and VI exceeds the average number of cationic charges resulting from protonated or quaternized amine groups by a factor of more than 1.2, more preferred of more than 1.5, most preferred of more than 1.8.

The zwitterionic polyamines of the invention are prepared in a multistage process. In the first step of this process a linear or branched polyamine having 2 to 10 primary or secondary nitrogen atoms and containing one of the above spacers between tow nitrogen atoms is reacted with at least one C₂- to C₄-alkylene oxide or tetrahydrofurane at such a ratio that on each NH group of the polyamine 1 to 50, preferably 15 to 25 alkylene oxide units or tetrahydrofurane units are added. Ethylene oxide and propylene oxide are the preferred alkoxylating agents. If a mixture of alkylene oxides is added to the amino nitrogen then the polymerized alkylene oxides may be present in statistical distribution or as blocks. For example one can add first 10 to 20 of ethylene oxide units per NH group in the polyamine and then add 5 to 10 propylene oxide units or vice versa.

Most preferred ethylene oxide alone or combinations of 1-15% propylene oxide or 1-10% butylene oxide with 85-99, 90-99% ethylene oxide respectively are used. If a combination of ethylene oxide and propylene oxide or butylene oxide is used preferably the propylene oxide or butylene oxide is reacted first with the NH groups of the polyamine and the ethylene oxide is added after that.

The above described procedure gives polyalkoxylated products which have groups of formula

- (A)ₙ -H ,

wherein A and n have the meaning given for formula V.

The linear or branched polyamines are preferably ethoxylated in the first step of the production of the zwitterionic polyamines.

In order to produce zwitterionic polyamines having end groups of formula VI a linear or branched polyamine having 2 to 10 nitrogen atoms and containing at least 2 primary or secondary amino nitrogen groups is reacted with up to 1 glycidol per NH group. The reaction product thus obtained is in the first step of the process according to the invention alkoxylated at the OH groups and remaining NH groups as described above. The reaction of glycidol with said polyamine may be carried out to such an extent that at least 50 to 100% of the NH groups of the polyamine are substituted by one glycidol unit.

In the second step of the production of the zwitterionic polyamines an anionic group is introduced into the alkoxylated polyamines obtained in the first step. This may be achieved by reacting the alkoxylated polyamines in a Michael type addition reaction with acrylic acid, methacrylic acid, vinyl sulfonic acid, vinylphosphonic acid or their alkalimetal or ammonium salts or by reacting them with halogen sulfonic acid, halogen phosphorous acid, propane sultone or halogen acetic acid. The preferred component for introducing anionic groups is chlorosulfonic acid.

Dependent on the amount of anionic agent used in the second step zwitterionic products are obtained which contain either two substituents of formula V or VI or contain only one of them, if, for instance, only one mole of the anionic agent is used per one mole of OH end group of the alkoxylated polyamine. The non-reacted end groups of the alkoxylated polyamine may be characterized by a group selected from radicals consisting of

―(A)ₙ―H,

and 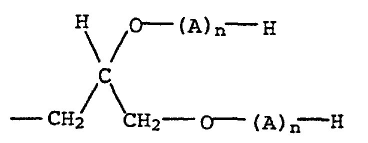 the meaning of A and n is the same as in formula V or VI.

The degree of substitution of the OH groups in the alkoxylated polyamines is such, that the finally resulting zwitterionic polyamine is net anionic at the pH of intended use; e.g. from 40% up to 100% of the OH group are substituted by an anionic group. Preferably more than 60%, more preferred more then 80%, most preferred 90-100% of the OH-groups are substituted by an anionic group.

Moreover the zwitterionic polyamines may also contain only one substituent of formula V or VI and instead of the above described radicals a C₁- C₂₂-alkyl group or a C₇- to C₂₂-aralkyl group. Such compounds result when the polyamine used in the first step contains secondary amino groups having a C₁- to C₂₂-alkyl or a C₇- to C₂₂-aralkyl substituent.

The zwitterionic polyamines obtained in the second step may optionally reacted in a third step with a quaternizing agent. Alternatively, quaternized products may also be obtained by first quaternizing the reaction products obtained in the first step, i.e. the polyalkoxylated polyamines. Suitable quaternization agents are for example C₁- to C₂₂-alkylhalides, C₇- to C₂₂-aralkyl halides C₁-C₂-dialkylsulfates or alkylene oxides. Examples of quaternizing agents are dimethyl sulfate, diethyl sulfate, methyl chloride, ethyl chloride, methyl bromide, ethyl bromide, butyl bromide, hexyl chloride, benzyl chloride, benzyl bromide, ethylene oxide or propylene oxide. Dialkylsulfates, C₁-C₄-alkylchlorides and benzyl chloride are preferred. Dimethyl sulfate is the most preferred quaternizing agent. Up to 100% of the tertiary nitrogen atoms of the zwitterionic polyamine may be quaternized. If there is a quaternization step, then the degree of quaternization is, for example, 10 to 100%, preferably at least 25 % and more preferably 75 to 100%.

According to a preferred embodiment of the process for the production of zwitterionic polyamines in the first step
(i) a polyamine selected from the group consisting of bis(hexamethylene)triamine, bis(aminopropyl)piperazine, N,N'-bis(aminopropyl)hexamethylenediamine and N,N,N',N'',N''-penta(2,3-dihydroxypropyl)-bis(hexamethylene)triamine - the latter is obtained by reacting bis(hexamethylene)triamine with glycidol in a molar ratio of 1:5) - is reacted with
(ii) an alkylene oxide selected from the group consisting of ethylene oxide, propylene oxide, butylene oxide and mixtures of the said alkylene oxides, at such a ratio that on each NH group of the polyamine 15 to 40 units of the alkylene oxide are added,
in the second step
the alkoxylated polyamine obtained in the first step is reacted with chlorosulfonic acid in such ratio that at least one teritary end group of the polyamine contains two groups having the formula

-(A)ₙ-X (V),

wherein
- A: is an ethylene oxide unit, a propylene oxide unit or a butylene oxide unit,
- n: is 15 - 40 and
- X: is SO₃H,
and
in the third step
the zwitterionic reaction product of the second step is quaternized with dimethyl sulfate, methyl chloride or benzyl chloride.

The quaternization can also be carried out as a second step in the multistage process for the production of zwitterionic polyamines. The alkoxylated polyamine obtained in the first step is quaternized up to 100 % and subsequently reacted with chlorosulfonic acid or another agent capable to introduce an anionic group. This procedure is preferred for the production of quaternized zwitterionic polyamines.

The zwitterionic polyamines are used as additive in laundry detergent compositions which provide enhanced hydrophilic soil, inter alia, clay, removal benefits. The new zwitterionic polyamines are especially useful in detergents comprising a surfactant system which comprises mid-chain branched surfactants inter alia mid-chain branched alkyl sulphonates. The zwitterionic polyamines are additionally used as effective dispersants for hydrophilic particles within aqueous and nonaqueous solutions and formulations.

The degree of quaternization and of sulfatation was determined by ¹H-NMR. The amine number was determind by amine titration according to DIN 16 945.

### Example 1

(a) Ethoxylation of bis(hexamethylene)triamine ("BHMT")
   A pressurizable 5 1 autoclave fitted with a stirrer and a heating device was the sealed and three times pressurized with nitrogen at 10 bar. 150.5 g (0.7 mole) of BHMT and 15 g of water were placed in the autoclave which was heated to 80°C. The autoclave was then sealed presure-tight and three times pressurized with nitrogen at 5 bar and thereafter the pressure released. The contents of the autoclave were heated while stirring to 110°C. At this temperature 157.1 g (3.57 moles) of ethylene oxide were added continuously while maintaining the temperature between 110 - 120°C and the maximum pressure up to 5 bar. The reaction mixture was stirred until the pressure was constant and then cooled to about 80°C. The pressure was then released, the autoclave three times pressurized with nitrogen at 5 bar and 9.2 g of a 50%strenght by weight sodium hydroxide solution were added.
   The autoclave was then sealed and vacuum continuously applied to remove the water. The contents of the reactor were heated for four hours at 120°C and at a pressure of 10 mbar.
   Vacuum was removed with nitrogen and the autoclave heated to 140°C. Between 140 and 150°C 2,926 g (66.5 moles) of ethylene oxide were continuously introduced into the autoclave while stirring. The maximum pressure was 10 bar. The reaction mixture was stirred until the pressure was constant. The contents of the reactor were then cooled to 80°C and the reactor three times pressurized with nitrogen at 5 bar. 3,238 g of a reaction product was obtained which was an ethoxylated BHMT containig 20 ethylene oxide units per NH group of bis(hexamethylene)triamine ("BHMT E020").
(b) Quaternization of ethoxylated bis(hexamethylene)triamine with 20 moles of ethylene oxide per NH group in BHMT
   Into a weighed, 2000ml, 3 neck round bottom flask fitted with argon inlet, condenser, addition funnel, thermometer, mechanical stirring and argon outlet (connected to a bubbler) is added 455.0 g of BHMT E020 (0.295mol N, 98% active, M_{w} 4,626 g/mole) and methylene chloride (1000g) under argon. The mixture is stirred at room temperature until the polymer has dissolved. The mixture is then cooled to 5°C using an ice bath. Dimethyl sulfate (39.5g, 0.31mol, 99%, m.w.-126.13) is slowly added using an addition funnel over a period of 15 minutes. The ice bath is removed and the reaction is allowed to rise to room temperature. After 48 hrs. the reaction is complete. The obtained product was analyzed by titration of the amine-number and by ¹H-NMR integration to have more then 90% of the nitrogen atoms quaternized.
c) Sulfation of quaternized ethoxylated bis(hexamethylene)tri-amine
   Under argon, the reaction mixture from the quaternization step (b) is cooled to 5°C using an ice bath (0.59 mol OH). Chlorosulfonic acid (72g, 0.61 mol, 99%, mw-116.52) is slowly added using an addition funnel. The temperature of the reaction mixture is not allowed to rise above 10°C. The ice bath is removed and the reaction is allowed to rise to room temperature. After 6 hrs. the reaction is complete. The reaction is again cooled to 5°C and sodium methoxide (264g, 1.22 mol, Aldrich, 25% in methanol, m.w.-54.02) is slowly added to the rapidly stirred mixture. The temperature of the reaction mixture is not allowed to rise above 10°C. The reaction mixture is transferred to a single neck round bottom flask. Purified water (1300ml) is added to the reaction mixture and the methylene chloride, methanol and some water is stripped off on a rotary evaporator at 50°C. The clear, light yellow solution is transferred to a bottle for storage. The final product pH is checked and adjusted to ∼9 using 1N NaOH or 1N HCl as needed. The obtained product was analyzed by ¹H-NMR integration to have more then 90% of the OH-end groups of the polyethylene oxide chains sulfated.

### Examples 2 - 5

According to the procedure given in Example 1 (a) the following amines
- Amine 1:: bis(hexamethylene)triamine
- Amine 2:: bis(aminopropyl)piperazine
- Amine 3:: N,N'-bis(aminopropyl)hexamethylenediamine
- Amine 4:: N,N,N',N'',N''-penta(2,3-dihydroxypropyl)-bis(hexamethylene)triamine which is the reaction product of 1 mole of bis(hexamethylene)triamine with 5 moles of glycidol
were reacted with ethylene oxide in the amounts given in Table 1. The ethoxylated amines were then - with the exception of Example 5 - quaternized following the procedure given in Example 1 (b) and subsequently sulfated according to the procedure of Example 1 (c). The amounts of dimethylsulfate and chlorsulfonic acid were adjusted appropriately. The degree of quaternization and sulfation is given in Table 1.

**Table 1**

| Example | Amine No. | Moles of EO*added per mole of NH groups in amine | Amine number of EO addition product | % quaternization | % sulfation |
|---|---|---|---|---|---|
| 2 | 1 | 20 | 40.6 | 90 | 50 |
| 3 | 2 | 20 | 62.3 | 90 | 90 |
| 4 | 3 | 20 | 29.9 | 90 | 90 |
| 5 | 4 | 10 | 29.2 | 0 | 90 |

| | | | | | |
|---|---|---|---|---|---|
| * EO: ethylene oxide | | | | | |

## Claims

1. A zwitterionic polyamine comprising a linear or branched hydrophobic polyamine backbone having 2 to 10 tertiary amino nitrogen atoms and a spacer between two tertiary nitrogen atoms wherein the spacer is selected from the group consisting of C₈-C₁₆-alkylene, C₅-C₁₅-cyloalkylene, 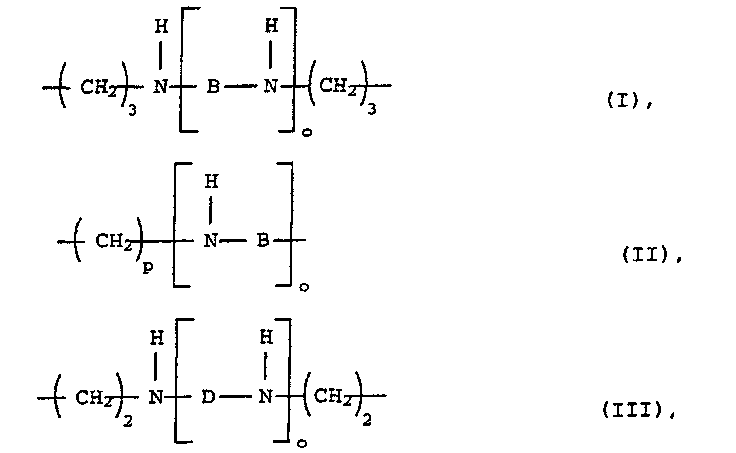 wherein in formulae I, II and III
B is C₂-C₁₆-alkylene, C₅-C₁₅-cycloalkylene
D is C₄-C₁₆-alkylene, C₅-C₁₅-cycloalkylene
o is 1 or 2,
p is 3 to 8, 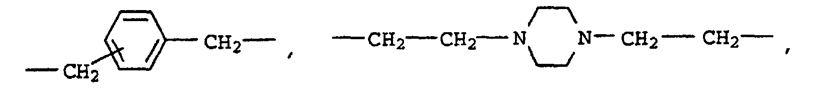 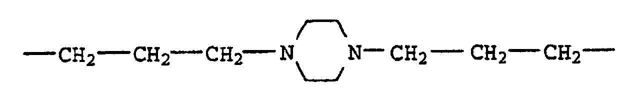 and 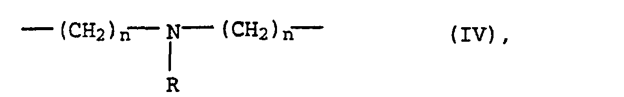 wherein in formula IV
R = C₁- to C₂₂-alkyl or C₇-C₂₂-aralkyl
and n = 3 to 6,
at least one tertiary amine end group of the polyamine backbone contains two groups having the formula
- (A)ₙ-X (V)
or 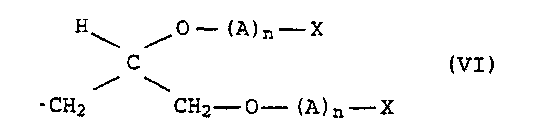 wherein
A means an ethylene oxide unit, a propylene oxide unit, a unit of butylene oxides and a tetrahydrofuran unit,
n is a number of from 1 to 50,
X is ― SO₃M , ―CH₂―CH₂―SO₃M , ―CH₂―CH₂―CH₂―SO₃M , 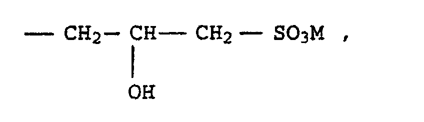 ― CH₂― COOM , ― CH₂ ― CH₂ ― COOM ,
― PO₃M₂, ― CH₂ ― CH₂ ― PO₃M₂,
with the proviso that in formula VI one X may also be hydrogen and
M is hydrogen, alkali metal or ammonium,
or contains one group of formula V or VI and one group selected from radicals consisting of
―(A)ₙ―H, 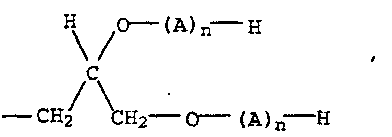
C₁- to C₂₂-alkyl and C₇-C₂₂-aralkyl, the meaning of A and n is the same as in formula V or VI, said zwitterionic polyetherpolyamine having a molecular weight up to 9000 and optionally containing up to 100% of the nitrogen atoms quaternized.

2. A zwitterionic polyamine as claimed in claim 1, wherein the tertiary nitrogen atoms of the end groups of the polyamine backbone contain two groups of formula V or VI.

3. A zwitterionic polyamine as claimed in claim 1, wherein the nitrogen atoms of the end groups of the polyamine backbone are quaternized and contain, as substituents, two groups of formula V or VI and one C₁- to C₂₂-alkyl group or a hydroxyalkyl group.

4. A zwitterionic polyamine as claimed in claim 1, wherein the nitrogen atoms of the end groups of the polyamine backbone are quaternized and contain, as substituents, two groups of formula V and a C₁- to C₂₂-alkyl group.

5. A zwitterionic polyamine as claimed in claim 1, wherein the nitrogen atoms of the end groups of the polyamine backbone are quaternized and contain, as substituents, two groups of formula V and a hydroxyethyl or hydroxypropyl group.

6. A zwitterionic polyamine as claimed in claim 1, wherein the spacer of the poyamine backbone is a cyclic C₅-C₁₅-alkylene group.

7. A zwitterionic polyamine as claimed in claim 1, wherein the polyamine backbone is derived from a polyamine selected from the group consisting of bis(hexamethylene)triamine, N,N'-bis(3-aminopropyl)piperazine, and N,N'-bis(2-aminoethyl)piperazine and 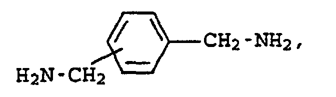 and wherein at least one tertiary amine end group of the polyamine backbone contains two groups having formula V or VI.

8. A process for the production of a zwitterionic polyamine which comprises a first step wherein
(i) a linear or branched hydrophobic polyamine having 2 to 10 primary or secondary amino nitrogen atoms and one spacer between two nitrogen atoms wherein the spacer is selected from the group consisting of C₈- to C₁₅-alkylene, C₅- to C₁₅-cycloalkylene, 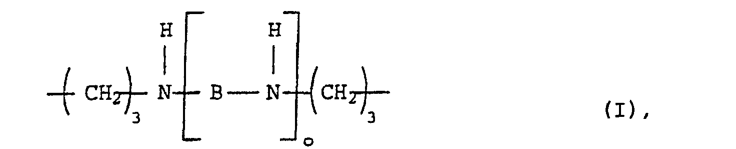 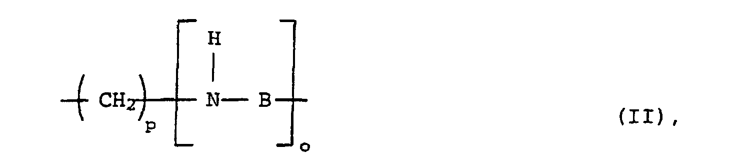 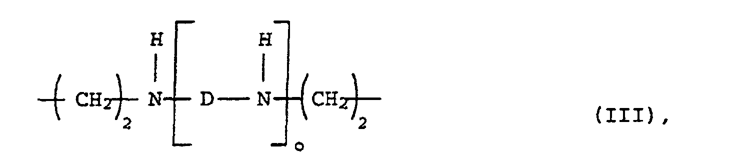 wherein in formulae I, II and III
B is C₂-C₁₆-alkylene, C₅-C₁₅-cycloalkylene
D is C₄-C₁₆-alkylene, C₅-C₁₅-cycloalkylene
o is 1 or 2
p is 3 to 8 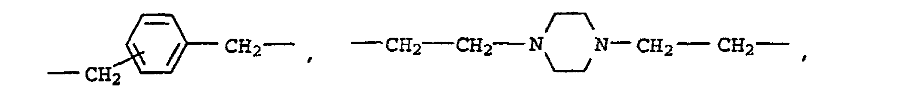 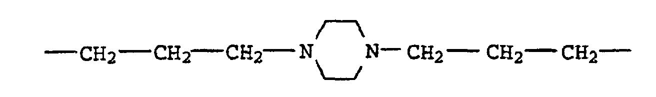 and 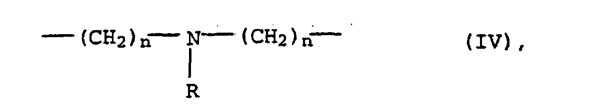 wherein in formula IV
R = C₁- to C₂₂-alkyl or C₇-C₂₂-aralkyl
and n = 3 to 6,
is reacted with
(ii) at least one C₂- to C₄-alkylene oxide or tetrahydrofuran at such a ratio that on each NH group of the polyamine 1 to 50 units of the alkylene oxide are added,
a second step wherein the alkoxylated polyamine obtained in the first step is reacted with a compound selected from the group consisting of a halogen sulfonic acid, halogen phosphorous acid, vinyl sulfonic acid, propane sultone, halogen acetic acid, acrylic acid, methacrylic acid, vinyl phosphorous acid and the alkali metal or ammonium salts of the said acids, in such a manner that at least one tertiary amine end group of the alkoxylated polyamine contains two groups having the formula
―(A)ₙ―X (V)
or 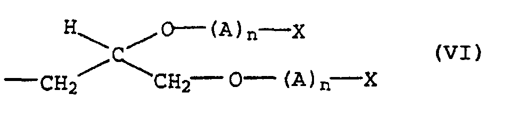 wherein
A means an ethylene oxide unit, a propylene oxide unit, a unit of butylene oxides and a tetrahydrofuran unit,
n is a number of from 1 to 50,
X is ― SO₃M,― CH₂― CH₂― SO₃M , ― CH₂― CH₂― CH₂― SO₃M , 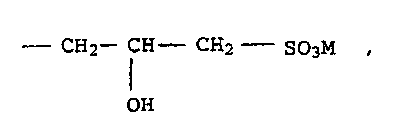 ―CH₂― COOM , ―CH₂―CH₂―COOM ,
―PO₃M , ―CH₂ ― CH₂ ― PO₃M₂ ,
with the proviso that in formula VI one X may also be hydrogen and
M is hydrogen, alkali metal or ammonium,
or contains one group of formula V or VI and one group selected from radicals consisting of
―(A)ₙ―H, 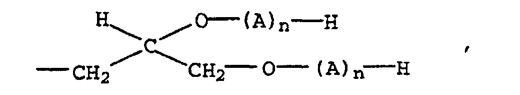
the meaning of A and n is the same as in formula V or VI,
and optionally
a third step wherein up to 100% of the tertiary nitrogen atoms of the reaction product obtained in the second step are quaternized, said degree of quaternization may also be obtained by first quaternizing the reaction product obtained in the first step and subsequently carrying out the second step.

9. A process is claimed in claim 8, wherein in the first step
(i) a polyamine selected from the group, consisting of bis (hexamethylene)triamine, bis(aminopropyl)piperazine, N,N'-bis(aminopropyl)hexamethylenediamine and N,N,N',N'',N''-penta(2,3-dihydroxypropyl)-bis(hexamethylene)triamine, is reacted with
(ii) an alkylene oxide selected from the group consisting of ethylene oxide, propylene oxide, butylene oxide and mixtures of the said alkylene oxides, at such a ratio that on each NH group of the polyamine 15 to 40 units of the alkylene oxide are added,
in the second step
the alkoxylated polyamine obtained in the first step is reacted with chlorosulfonic acid in such ratio that at least one teritary end group of the polyamine contains two groups having the formula
- (A)ₙ-X (V),
wherein
A is an ethylene oxide unit, a propylene oxide unit or a butylene oxide unit,
n is 15 - 40 and
X is SO₃H,
and
in the third step
the zwitterionic reaction product of the second step is quaternized with dimethyl sulfate, methyl chloride or benzyl chloride.

10. A process as claimed in claim 8, wherein the alkoxylated polyamine obtained in the first step is quaternized up to 100 % and subsequently reacted with chlorosulfonic acid.

## Patentansprüche

1. Zwitterionisches Polyamin, enthaltend eine lineare oder verzweigte hydrophobe Polyaminhauptkette mit 2 bis 10 tertiären Aminostickstoffatomen und einem Spacer zwischen zwei tertiären Stickstoffatomen, bei dem der Spacer aus der Gruppe bestehend aus C₈-C₁₆-Alkylen, C₅-C₁₅-Cycloalkylen, 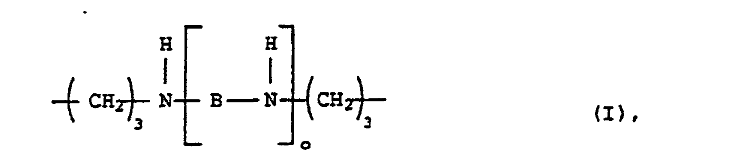 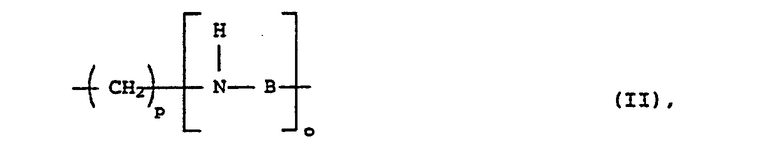 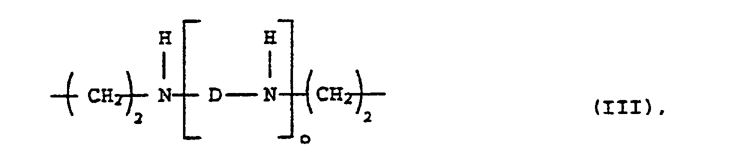 wobei in den Formeln I, II und III
B für C₂-C₁₆-Alkylen oder C₅-C₁₅-Cycloalkylen steht,
D für C₄-C₁₆-Alkylen oder C₅-C₁₅-Cycloalkylen steht,
o für 1 oder 2 steht,
p für 3 bis 8 steht, 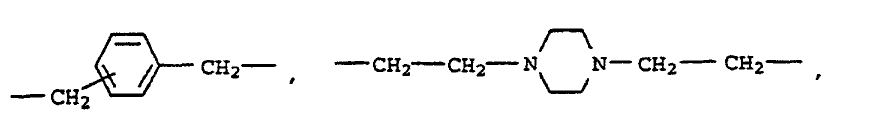 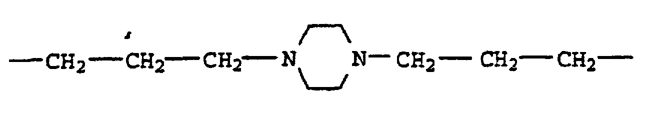 und 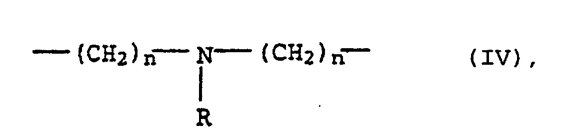 wobei in Formel IV R für C₁- bis C₂₂-Alkyl oder C₇-C₂₂-Aralkyl steht und n für 3 bis 6 steht,
stammt, mindestens eine tertiäre Aminendgruppe der Polyaminhauptkette zwei Gruppen der Formel
-(A)ₙ-X (V)
oder 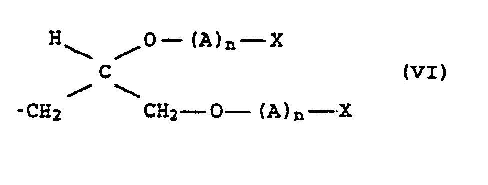 worin
A eine Ethylenoxid-Einheit, eine Propylenoxid-Einheit, eine Butylenoxid-Einheit und eine Tetrahydrofuran-Einheit bedeutet,
n für eine ganze Zahl von 1 bis 50 steht,
X für
― SO₃M , ― CH₂― CH₂― SO₃M , ― CH₂― CH₂― CH₂― SO₃M , 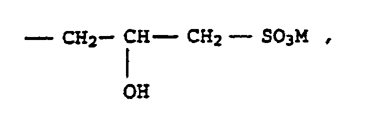 ―CH₂―COOM, ―CH₂―CH₂―COOM,
―PO₃M₂, ―CH₂―CH₂―PO₃M₂,
steht,
mit der Maßgabe, daß in Formel VI ein X auch für Wasserstoff stehen kann, und
M für Wasserstoff, Alkalimetall oder Ammonium steht,
oder eine Gruppe der Formel V oder VI und eine unter Resten bestehend aus
―(A)ₙ―H, 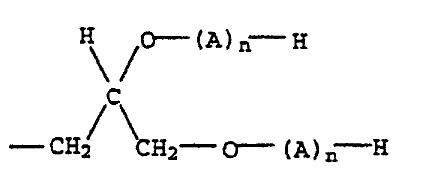
C₁- bis C₂₂-Alkyl und C₇-C₂₂-Aralkyl, wobei A und n die gleiche Bedeutung wie in Formel V oder VI besitzen, ausgewählte Gruppe enthält,
wobei das zwitterionische Polyetherpolyamin ein Molekulargewicht bis zu 9000 aufweist und gegebenenfalls bis zu 100% der Stickstoffatome quaternisiert enthält.

2. Zwitterionisches Polyamin nach Anspruch 1, bei dem die tertiären Stickstoffatome der Endgruppen der Polyaminhauptkette zwei Gruppen der Formel V oder VI enthalten.

3. Zwitterionisches Polyamin nach Anspruch 1, bei dem die Stickstoffatome der Endgruppen der Polyaminhauptkette quaternisiert sind und als Substituenten zwei Gruppen der Formel V oder VI und eine C₁- bis C₂₂-Alkylgruppe oder eine Hydroxyalkylgruppe enthalten.

4. Zwitterionisches Polyamin nach Anspruch 1, bei dem die Stickstoffatome der Endgruppen der Polyaminhauptkette quaternisiert sind und als Substituenten zwei Gruppen der Formel V und eine C₁- bis C₂₂-Alkylgruppe enthalten.

5. Zwitterionisches Polyamin nach Anspruch 1, bei dem die Stickstoffatome der Endgruppen der Polyaminhauptkette quaternisiert sind und als Substituenten zwei Gruppen der Formel V und eine Hydroxyethyl- oder Hydroxypropylgruppe enthalten.

6. Zwitterionisches Polyamin nach Anspruch 1, bei dem es sich bei dem Spacer der Polyaminhauptkette um eine cyclische C₅-C₁₅-Alkylengruppe handelt.

7. Zwitterionisches Polyamin nach Anspruch 1, bei dem sich die Polyaminhauptkette von einem Polyamin aus der Gruppe bestehend aus Bis(hexamethylen)triamin, N,N'-Bis(3-aminopropyl)piperazin und N,N'-Bis(2-aminoethyl)piperazin und 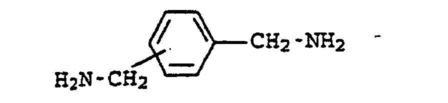 ableitet und mindestens eine tertiäre Aminendgruppe der Polyaminhauptkette zwei Gruppen der Formel V oder VI enthält.

8. Verfahren zur Herstellung eines zwitterionischen Polyamins mit einem ersten Schritt, bei dem man
(i) ein lineares oder verzweigtes hydrophobes Polyamin mit 2 bis 10 primären oder sekundären Aminostickstoffatomen und einem Spacer zwischen zwei Stickstoffatomen, bei dem der Spacer aus der Gruppe bestehend aus C₈- bis C₁₅-Alkylen, C₅- bis C₁₅-Cycloalkylen, 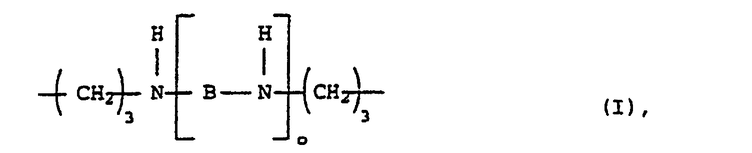 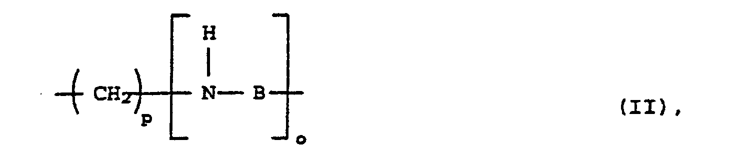 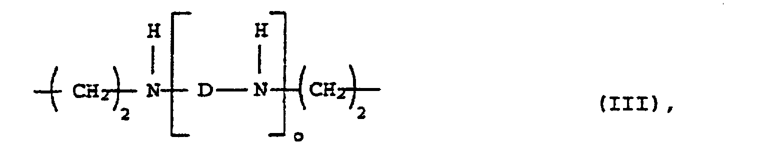 wobei in den Formeln I, II und III
B für C₂-C₁₆-Alkylen oder C₅-C₁₅-Cycloalkylen steht,
D für C₄-C₁₆-Alkylen oder C₅-C₁₅-Cycloalkylen steht,
o für 1 oder 2 steht,
p für 3 bis 8 steht, 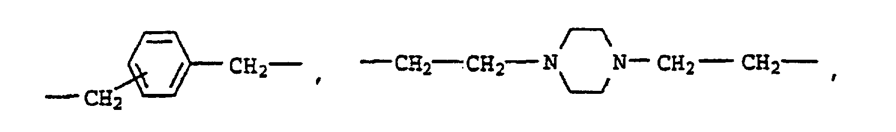 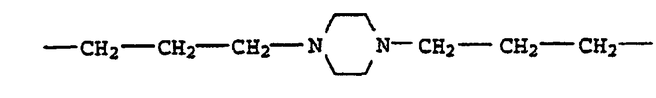 und 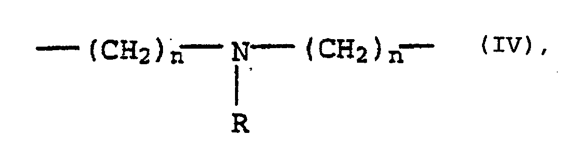 wobei in Formel IV R für C₁- bis C₂₂-Alkyl oder C₇-C₂₂-Aralkyl steht und n für 3 bis 6 steht,
stammt,
mit
(ii) mindestens einem C₂- bis C₄-Alkylenoxid oder Tetrahydrofuran in einem solchen Verhältnis umsetzt, daß an jede NH-Gruppe des Polyamins 1 bis 50 Einheiten des Alkylenoxids addiert werden,
einem zweiten Schritt, bei dem man das im ersten Schritt erhaltene alkoxylierte Polyamin mit einer Verbindung aus der Gruppe bestehend aus einer Halogensulfonsäure, einer Halogenphosphonsäure, Vinylsulfonsäure, Propansulton, einer Halogenessigsäure, Acrylsäure, Methacrylsäure, Vinylphosphonsäure und den Alkalimetall- oder Ammoniumsalzen dieser Säuren so umsetzt, daß mindestens eine tertiäre Aminendgruppe des alkoxylierten Polyamins zwei Gruppen der Formel
-(A)ₙ-X (V)
oder 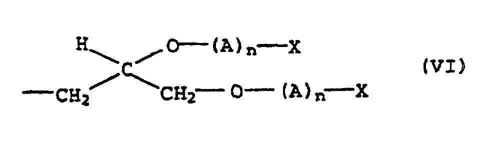 worin
A eine Ethylenoxid-Einheit, eine Propylenoxid-Einheit, eine Butylenoxid-Einheit und eine Tetrahydrofuran-Einheit bedeutet,
n für eine ganze Zahl von 1 bis 50 steht,
X für
― SO₃M , ― CH₂― CH₂― SO₃M , ― CH₂― CH₂― CH₂― SO₃M , 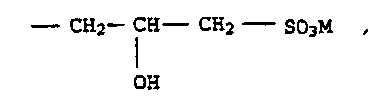 ― CH₂― COOM , ― CH₂ ― CH₂ ― COOM ,
― PO₃M , ― CH₂ ― CH₂ ― PO₃M₂
steht,
mit der Maßgabe, daß in Formel VI ein X auch für Wasserstoff stehen kann, und
M für Wasserstoff, Alkalimetall oder Ammonium steht,
oder eine Gruppe der Formel V oder VI und eine unter Resten bestehend aus
―(A)ₙ―H, 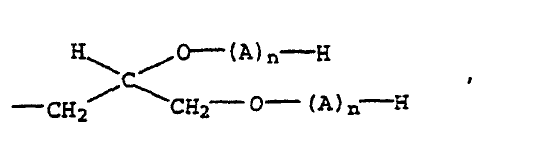
wobei A und n die gleiche Bedeutung wie in Formel V oder VI besitzen, ausgewählte Gruppe enthält,
und gegebenenfalls einem dritten Schritt, bei dem man bis zu 100% der tertiären Stickstoffatome des im zweiten Schritt erhaltenen Reaktionsprodukts quaternisiert, wobei der Quaternisierungsgrad auch dadurch erhältlich ist, daß man zuerst das im ersten Schritt erhaltene Reaktionsprodukt quaternisiert und erst danach den zweiten Schritt durchführt.

9. Verfahren nach Anspruch 8, bei dem man
im ersten Schritt
(i) ein Polyamin aus der Gruppe bestehend aus Bis(hexamethylen)triamin, Bis(aminopropyl)-piperazin, N,N'-Bis(aminopropyl)hexamethylendiamin und N,N,N',N",N"-Penta(2,3-dihydroxypropyl)bis(hexamethylen)triamin mit
(ii) einem Alkylenoxid aus der Gruppe bestehend aus Ethylenoxid, Propylenoxid, Butylenoxid und Gemischen dieser Alkylenoxide in einem solchen Verhältnis umsetzt, daß an jede NH-Gruppe des Polyamins 15 bis 40 Einheiten des Alkylenoxids addiert werden,
im zweiten Schritt
das im ersten Schritt erhaltene alkoxylierte Polyamin in einem solchen Verhältnis mit Chlorsulfonsäure umsetzt, daß mindestens eine tertiäre Endgruppe des Polyamins zwei Gruppen der Formel
-(A)ₙ-X (V)
worin
A für eine Ethylenoxid-Einheit, eine Propylenoxid-Einheit oder eine Butylenoxid-Einheit steht,
n für 15 bis 40 steht und
X für SO₃H steht, enthält,
und im dritten Schritt
das zwitterionische Reaktionsprodukt aus dem zweiten Schritt mit Dimethylsulfat, Methylchlorid oder Benzylchlorid quaternisiert.

10. Verfahren nach Anspruch 8, bei dem man das im ersten Schritt erhaltene alkoxylierte Polyamin bis zu 100% quaternisiert und danach mit Chlorsulfonsäure umsetzt.

## Revendications

1. Polyamine zwittérionique comprenant un squelette polyamine hydrophobe linéaire ou ramifié ayant 2 à 10 atomes d'azote amino tertiaires et un espaceur compris entre deux atomes d'azote tertiaires, dans laquelle l'espaceur est choisi dans le groupe constitué par les groupes alkylène en C₈ à C₁₆, cycloalkylène en C₅ à C₁₅, 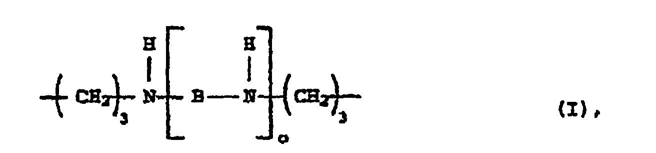 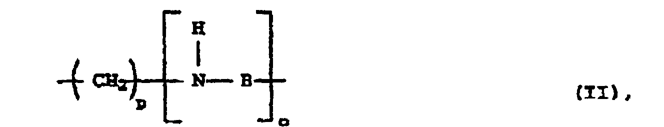 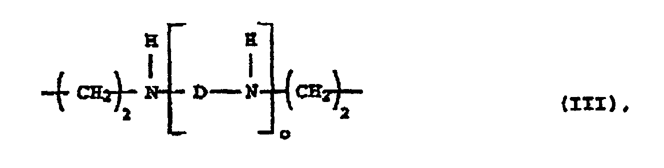 formules I, II et III, dans lesquelles :
B est un groupe alkylène en C₂ à C₁₆, cycloalkylène en C₅ à C₁₅ ;
D est un groupe alkylène en C₄ à C₁₆, cycloalkylène en C₅ à C₁₅ ;
o vaut 1 ou 2 ;
p vaut de 3 à 8, 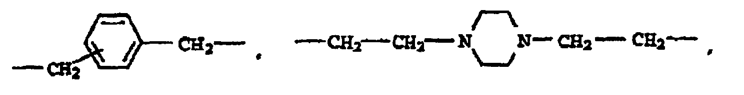 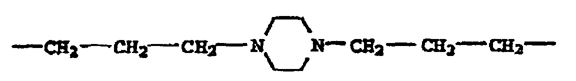
et 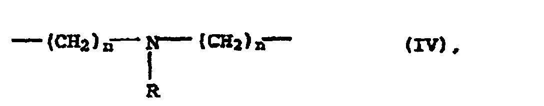 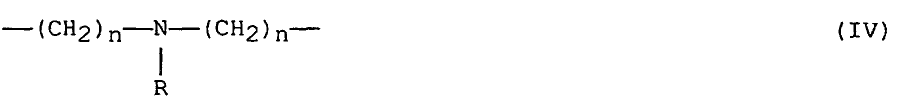 formule IV, dans laquelle
R = un groupe alkyle en C₁ à C₂₂ ou aralkyle en C₇ à C₂₂ et
n = 3 à 6,
au moins un groupe d'extrémité amine tertiaire du squelette de polyamine contient deux groupes ayant les formules :
-(A)ₙ-X (V)
ou 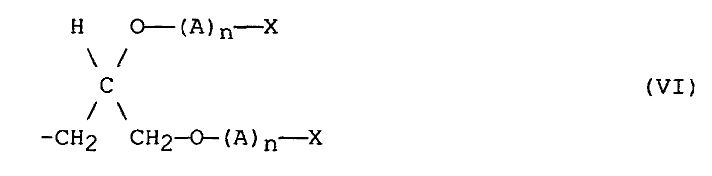 dans lesquelles
A signifie un motif d'oxyde d'éthylène, un motif d'oxyde de propylène, un motif d'oxyde de butylène et un motif de tétrahydrofurane,
n est nombre de 1 à 50,
X est ―SO₃M, ―CH₂―CH₂―SO₃M, ―CH₂―CH₂―CH₂―SO₃M, 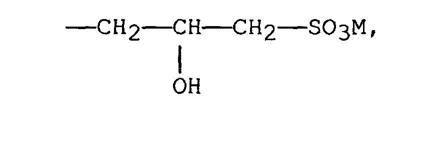 ―CH₂―COOM, ―CH₂―CH₂―COOM,
―PO₃M₂, ―CH₂―CH₂―PO₃M₂,
à condition que, dans la formule VI, un X puisse également être un atome d'hydrogène et
M est un atome d'hydrogène, un métal alcalin ou un groupe ammonium,
ou contient un groupe de formule V ou VI et un groupe choisi parmi les groupes constitués par :
―(A)ₙ―H, 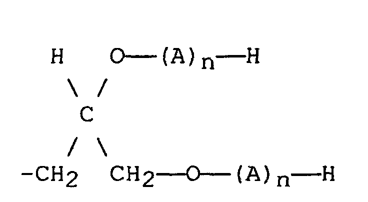
un groupe alkyle en C₁ à C₂₂ et aralkyle en C₇ à C₂₂, la signification de A et de n est la même que dans la formule V
ou VI, ladite polyéther-polyamine zwittérionique ayant une masse moléculaire allant jusqu'à 9 000 et contenant éventuellement jusqu'à 100% des atomes d'azote quaternisés.

2. Polyamine zwittérionique selon la revendication 1, dans laquelle les atomes d'azote tertiaires des groupes d'extrémité du squelette de polyamine contiennent deux groupes de formule V ou VI.

3. Polyamine zwittérionique selon la revendication 1, dans laquelle les atomes d'azote des groupes d'extrémité du squelette de polyamine sont quaternisés et contiennent, en tant que substituants, deux groupes de formule V ou VI et un groupe alkyle en C₁ à C₂₂ ou un groupe hydroxyalkyle.

4. Polyamine zwittérionique selon la revendication 1, dans laquelle les atomes d'azote des groupes d'extrémité du squelette de polyamine sont quaternisés et contiennent, en tant que substituants, deux groupes de formule V et un groupe alkyle en C₁ à C₂₂.

5. Polyamine zwittérionique selon la revendication 1, dans laquelle les atomes d'azote des groupes d'extrémité du squelette de polyamine sont quaternisés et contiennent, en tant que substituants, deux groupes de formule V et un groupe hydroxyéthyle ou hydroxypropyle.

6. Polyamine zwittérionique selon la revendication 1, dans laquelle l'espaceur du squelette de polyamine est un groupe alkylène en C₅ à C₁₅ cyclique.

7. Polyamine zwittérionique selon la revendication 1, dans laquelle le squelette de polyamine provient d'une polyamine choisie dans le groupe constitué par la bis(hexaméthylène)triamine, la N,N'-bis(3-aminopropyl)-pipérazine et la N,N'-bis(2-amino-éthyl)pipérazine et 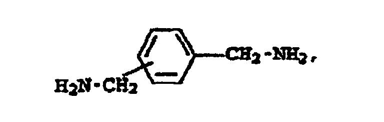 et dans laquelle au moins un groupe tertiaire d'extrémité du squelette de polyamine contient deux groupes ayant la formule V ou VI.

8. Procédé pour la production d'une polyamine zwittérionique qui comprend
une première étape, dans laquelle :
(i) une polyamine hydrophobe linéaire ou ramifiée ayant 2 à 10 atomes d'azote amino primaires ou secondaires et un espaceur compris entre deux atomes d'azote dans lesquels l'espaceur est choisi dans le groupe constitué par les groupes alkylène en C₈ à C₁₅, cycloalkylène en C₅ à C₁₅, 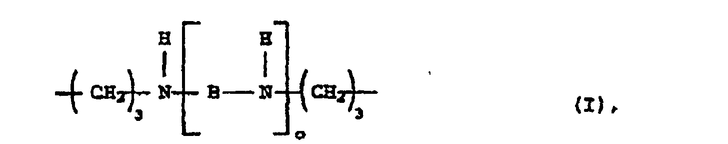 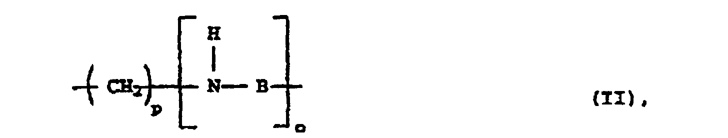 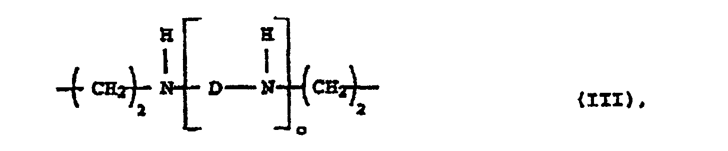 formules I, II et III, dans lesquelles :
B est un groupe alkylène en C₂ à C₁₆, cycloalkylène en C₅ à C₁₅ ;
D est un groupe alkylène en C₄ à C₁₆, cycloalkylène en C₅ à C₁₅ ;
o vaut 1 ou 2 ;
p vaut de 3 à 8, 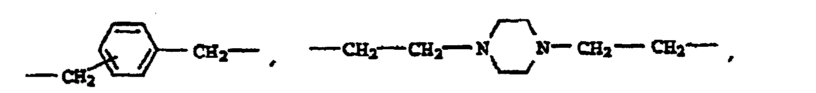 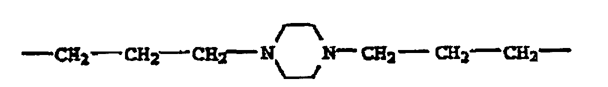
et 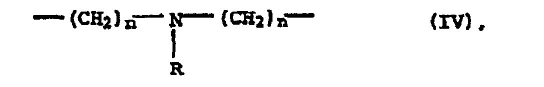 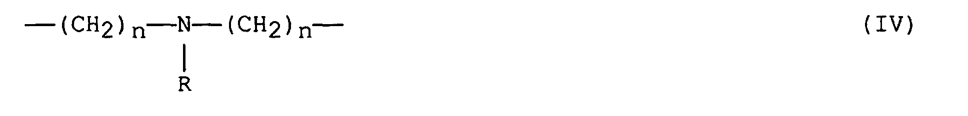 formule IV, dans laquelle
R = un groupe alkyle en C₁ à C₂₂ ou aralkyle en C₇ à C₂₂ et
n = 3 à 6,
est mise à réagir avec
(ii) au moins un oxyde d'alkylène en C₂ à C₄ ou un tétrahydrofurane à un rapport tel que sur chaque groupe NH de la polyamine, 1 à 50 motifs de l'oxyde d'alkylène sont ajoutés,
une deuxième étape dans laquelle la polyamine alcoxylée obtenue dans la première étape est mise à réagir avec un composé choisi dans le groupe constitué par un acide halogéno-sulfonique, un acide halogéno-phosphoreux, un acide vinyl-sulfonique, une propanesulfone, un acide halogéno-acétique, l'acide acrylique, l'acide méthacrylique, l'acide vinyl-phosphoré et les sels de métal alcalin ou d'ammonium desdits acides, de telle façon qu'au moins un groupe amine tertiaire d'extrémité de la polyamine alcoxylée contient deux groupes ayant la formule :
-(A)ₙ-X (V)
ou 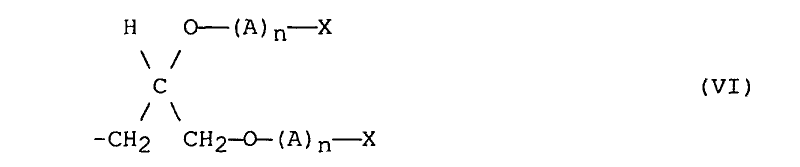 dans laquelle
A signifie un motif d'oxyde d'éthylène, un motif d'oxyde de propylène, un motif d'oxyde de butylène et un motif de tétrahydrofurane,
n est nombre de 1 à 50,
X est ―SO₃M, ―CH₂―CH₂―SO₃M, ―CH₂―CH₂―CH₂―SO₃M, 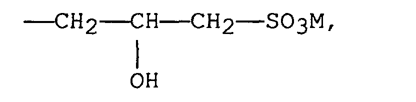 ―CH₂―COOM, ―CH₂―CH₂―COOM,
―PO₃M, ―CH₂―CH₂―PO₃M₂,
à condition que, dans la formule VI, un X puisse également être un atome d'hydrogène et
M est un atome d'hydrogène, un métal alcalin ou un groupe ammonium,
ou contient un groupe de formule V ou VI et un groupe choisi parmi les groupes constitués par :
―(A)ₙ―H, 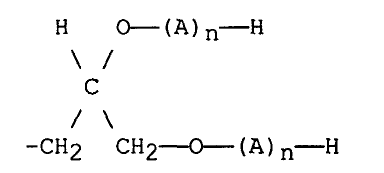
la signification de A et de n est la même que dans la formule V ou VI, et éventuellement
une troisième étape dans laquelle jusqu'à 100% des atomes d'azote tertiaire du produit réactionnel obtenu dans la deuxième étape sont quaternisés, ledit degré de quaternisation peut également être obtenu en quaternisant d'abord le produit réactionnel obtenu dans la première étape et en réalisant ultérieurement la deuxième étape.

9. Procédé selon la revendication 8, dans lequel :
dans la première étape
(i) une polyamine choisie dans le groupe constitué par la bis(hexaméthylène)triamine, la bis(aminopropyl)-pipérazine, la N,N'-bis(aminopropyl)hexaméthylènediamine et la N,N,N',N'',N''-penta(2,3-dihydroxypropyl)-bis-(hexaméthylène)triamine, est mise à réagir avec
(ii) un oxyde d'alkylène choisi dans le groupe constitué par l'oxyde d'éthylène, l'oxyde de propylène, l'oxyde de butylène et les mélanges desdits oxydes d'alkylène, à un rapport tel que sur chaque groupe NH de la polyamine, 15 à 40 motifs de l'oxyde d'alkylène sont ajoutés, dans la deuxième étape
la polyamine alcoxylée obtenue dans la première étape est mise à réagir avec l'acide chlorosulfonique dans un rapport tel qu'au moins un groupe tertiaire d'extrémité de la polyamine contient deux groupes ayant la formule :
-(A)ₙ-X (V)
dans laquelle
A est un motif d'oxyde d'éthylène, un motif d'oxyde de propylène ou un motif d'oxyde de butylène,
n vaut de 15 à 40, et
X est SO₃H,
et
dans la troisième étape
le produit réactionnel zwittérionique de la deuxième étape est quaternisé avec le sulfate de diméthyle, le chlorure de méthyle ou le chlorure de benzyle.

10. Procédé selon la revendication 8, dans lequel la polyamine alcoxylée obtenue dans la première étape est quaternisée jusqu'à 100% et est mise à réagir ultérieurement avec l'acide chlorosulfonique.
